# DEMANDE DE BREVET EUROPEEN

(11) **EP 1 510 284 A1**
(43) Date de publication de la demande: **02.03.2005**
(21) Numéro de dépôt: 04356145.5
(22) Date de dépôt: 23.08.2004
(51) Int. Cl.: B23P 11/00, B62D 15/02, B62D 5/04, G01D 5/347, G01L 3/12

(54) **Arbre equipé d'une bague de codage optique et procédé de fabrication de cet arbre**

(30) Priorité: 28.08.2003 FR 0310245
(71) Demandeur: Etablissements Frank et Pignard, 74300 Thyez (FR)
(72) Inventeur: Exposito, Angel, 74130 Bonneville (FR)
(74) Mandataire: Le Cacheux, Samuel L.R.

(57) **Abrégé**

Arbre de transmission (2,3) équipé d'une bague de codage optique (6) rapportée.
Ensemble étant susceptible d'être assemblé par brochage et sertissage par roulage de la bague (6) sur l'arbre (2,3).

## Description

La présente invention concerne le domaine technique des systèmes utilisés pour repérer la position d'un mobile animé d'un mouvement de rotation.

L'invention concerne plus particulièrement les systèmes assurant un repérage de la position d'un arbre de transmission destiné à assurer l'entraînement en rotation d'un système mécanique pour réaliser ce qu'il est convenu d'appeler un entraînement de puissance.

L'invention concerne également des arbres destinés à transmettre un ordre ou une commande à un système mécanique tel que par exemple un arbre de transmission utilisé pour transmettre l'information, émise à partir d'un volant d'un véhicule automobile, à la direction de ce même véhicule.

Dans le cadre d'une telle application par exemple, il est nécessaire de pouvoir détecter la position et l'effort exercé sur l'arbre de transmission afin de pouvoir procéder à l'assistance du mouvement et donc de la direction.

A cet effet, il est connu de mettre en oeuvre une jauge de torsion comprenant deux arbres de transmission qui sont mobiles en rotation l'un par rapport à l'autre et lié en rotation par une barre de torsion. Il est alors nécessaire de connaître la position de chaque arbre constitutif de la jauge de torsion tant de manière absolue que relative. En effet, la différence de position angulaire des arbres est fonction du couple de torsion appliqué à l'arbre de transmission.

Afin d'effectuer un tel repérage angulaire de chaque arbre de transmission, il a été développé une technique consistant à associer chaque arbre de transmission à des moyens de codage optiques qui permettent, avec un système de lecture adapté, de repérer leur position. Les moyens de codage optique se présentent sous la forme d'une surface optique sensiblement cylindrique usinée directement dans la masse des arbres de transmission.

Un tel mode de réalisation a permis de démontrer la faisabilité du procédé de détection optique de la position des arbres de transmission de la jauge de torsion mais présente l'inconvénient d'être particulièrement onéreux et donc inadapté à une production en grande série.

Ainsi, il est apparu le besoin d'un nouveau type d'arbre de transmission à codage optique et d'un procédé de fabrication qui permette de remplir les exigences de grande précision de réalisation notamment de la surface optique utilisée pour la détection de position tout en présentant un moindre coût de fabrication permettant de réaliser des jauges de torsion à un coût acceptable pour l'industrie automobile notamment.

Afin d'atteindre ces objectifs, l'invention concerne un procédé de fabrication d'un arbre de transmission équipé d'une bague de codage optique comprenant les étapes suivantes :
■ fabrication de l'arbre de transmission, de manière qu'il comprenne une portée de réception de la bague, présentant au moins un anneau de cannelures de direction axiale,
■ fabrication de la bague de codage, de manière qu'elle comprenne, d'une part, au moins une surface extérieure périphérique pour le codage optique et, d'autre part, un alésage axial de forme sensiblement analogue à celle de la portée présentant un diamètre intérieur inférieur au plus grand diamètre de la portée, y compris l'anneau de cannelures, et comprenant un épaulement intérieur qui présente un diamètre inférieur au diamètre intérieur de l'alésage axial,
■ brochage de la bague de codage sur l'arbre au niveau de la portée de réception, de manière à engager les cannelures dans la paroi de l'alésage vers l'épaulement intérieur, sans engager les cannelures dans l'épaulement,
■ et sertissage par roulage de la bague de codage au niveau d'une surface de la bague située à l'opposé de l'épaulement par rapport à l'anneau de cannelure.

L'association du brochage et du roulage de la bague de codage à l'opposé de l'épaulement par rapport à l'anneau de cannelure permet de manière fort avantageuse d'emprisonner les éventuels copeaux du matériau constitutif de la bague de codage susceptibles de se former lors du brochage. Cet emprisonnement permet alors de garantir la parfaite propreté de l'arbre de transmission obtenu en réduisant au maximum les risques de pollution voir d'endommagement de la surface extérieure cylindrique pour le codage optique de la bague.

Selon l'invention l'anneau de cannelures peut être réalisé de différentes façons.

Selon une caractéristique de l'invention, l'anneau de cannelures est aménagé en relief par rapport à la portée de réception de la bague. Le diamètre de l'anneau de cannelures au niveau du fond de cannelures est alors de préférence mais non nécessairement supérieur au diamètre de la portée.

Différentes formes peuvent être adoptées pour l'anneau de cannelures. Ainsi selon une caractéristique de l'invention l'anneau de cannelures présente, en section droite axiale, une forme trapézoïdale ou rectangulaire.

Selon une autre caractéristique de l'invention, les cannelures présentent, en section droite transversale, une forme trapézoïdale ou triangulaire, que l'anneau de cannelures soit réalisé en relief ou non.

Selon l'invention, l'arbre de transmission présente au moins un anneau de cannelures et peut donc en comporter plusieurs.

Ainsi, selon une caractéristique de l'invention, la fabrication de l'arbre de transmission est effectuée de manière que la portée de réception de la bague présente au moins deux anneaux de cannelures distants axialement l'un de l'autre.

De manière préférée mais non strictement nécessaire, le roulage de la bague de codage est alors effectué au niveau de la surface de la bague située en regard de la surface de la portée qui est située entre les deux anneaux de cannelures de manière à sertir la matière de la bague de codage entre les deux anneaux de cannelures.

Cette disposition avantageuse de l'invention permet alors de renforcer l'immobilisation axiale de la bague de codage optique sur l'arbre de transmission.

Selon l'invention, l'arbre de transmission et sa bague de codage peuvent être réalisés en tout matériau approprié. Selon une caractéristique préférée mais non strictement nécessaire de l'invention l'arbre de transmission est réalisé en acier et la bague de codage est réalisée dans un métal ou un alliage métallique présentant une dureté inférieure à celle de l'arbre de transmission. De manière préférée, la bague de codage est réalisée en maillechort, à savoir un alliage de cuivre, de nickel et de zinc, avec ou sans autre élément d'alliage.

Selon l'invention, l'usinage de la surface extérieure pour y réaliser les moyens de codage optique peut être effectué avant ou après le brochage et le roulage de ladite bague. Toutefois, de manière préférée, la surface optique de la bague de codage est usinée et réalisée après brochage et sertissage de ladite bague sur l'arbre de transmission. Ce mode de fabrication est particulièrement favorisé par les avantages techniques du procédé de fabrication conforme à l'invention dans la mesure où le brochage et le sertissage de la bague se fait sans dégagement de copeaux ou de particules polluantes.

Dans une application préférée mais non limitative, le procédé selon l'invention est mis en oeuvre pour réaliser une jauge de torsion comprenant deux arbres de transmission équipés chacun d'une bague de codage optique, mobiles l'un par rapport à l'autre en rotation axiale, en étant liés en rotation par une barre de torsion. Cette fabrication est alors réalisée en deux étapes :
■ fabrication de chacun des arbres de transmission conformément au procédé de fabrication selon l'invention décrit précédemment,
■ et assemblage des arbres de transmission ensemble et avec la barre de torsion.

De manière préférée, le brochage et le sertissage par roulage des bagues optiques sur leur arbre respectif sont réalisés avant l'assemblage des arbres entre eux, par l'intermédiaire de la barre de torsion.

L'usinage des deux zones de réflexion (miroir) des deux bagues optiques est réalisé après l'assemblage des deux arbres, de façon à assurer une coaxialité parfaite des deux surfaces de réflexion.

L'invention concerne également un arbre de transmission caractérisé en ce qu'il comprend, au moins, une bague de codage optique rapportée.

L'invention concerne, également, une jauge de torsion comprenant deux arbres de transmission, chacun mobile en rotation l'un par rapport à l'autre, en étant liés en rotation par une barre de torsion caractérisée en ce que chaque arbre de transmission est équipé d'une bague de codage optique rapportée.

Selon une caractéristique préférée, mais non strictement nécessaire de l'invention, les deux bagues de codage optique de chacun des arbres de transmission constitutifs de la jauge de torsion sont disposés de manière adjacente.

Selon une caractéristique de l'invention, la bague de codage optique est brochée et sertie par roulage sur son arbre de transmission, au niveau d'une portée de réception de la bague. Bien entendu, un autre mode de montage et d'assemblage de la bague sur l'arbre pourrait être envisagé.

Diverses autres caractéristiques de l'invention ressortent de la description ci-dessous effectuée en relation avec les dessins annexés qui illustrent un exemple, non limitatif, de réalisation d'une jauge de torsion comprenant deux arbres de transmission selon l'invention.
La **fig. 1** est une vue en coupe axiale d'une jauge de torsion selon l'invention.
La **fig. 2** est une élévation éclatée en coupe partielle de la jauge de torsion selon la **fig. 1.**
La **fig. 3** est une élévation partielle à plus grande échelle du détail A de la **fig. 2**.
La **fig. 4** est également une élévation à plus grande échelle du détail B de la **fig. 2.**
La **fig. 5** est une coupe transversale partielle selon la ligne **V-V** de la **fig. 3.**
La **fig. 6** est une coupe, analogue à la **fig. 5,** montrant une autre forme de réalisation des cannelures.

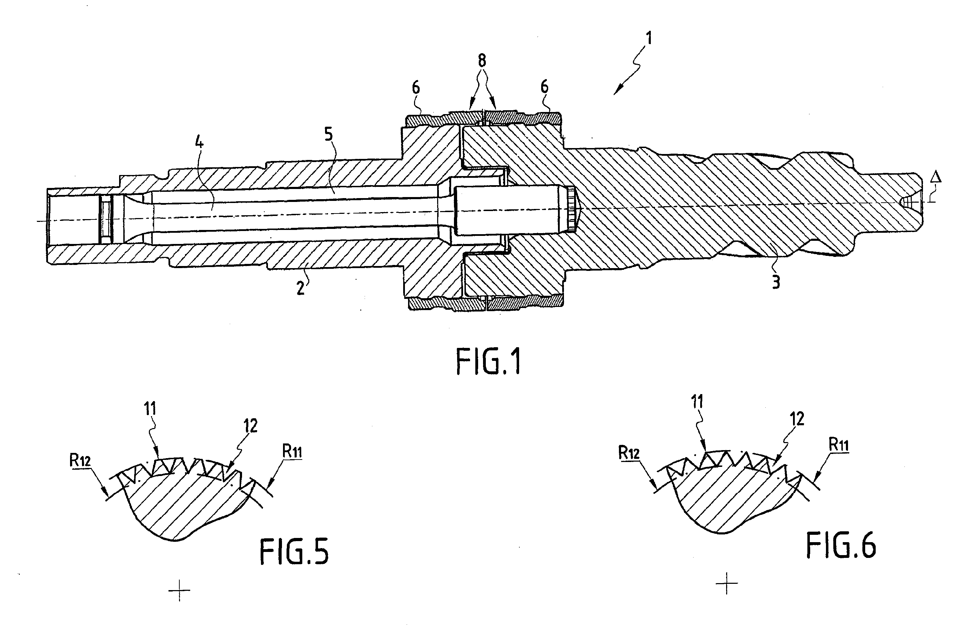

L'invention propose un nouveau procédé de fabrication d'un arbre de transmission équipé d'une bague de codage optique tel que susceptible d'être mis en oeuvre, par exemple mais non nécessairement, dans le cadre d'une jauge de torsion comme plus particulièrement illustrée à la **fig. 1** et désignée dans son ensemble par la référence 1.

Ainsi, la jauge de torsion **1** comprend deux arbres de transmission **2** et **3** d'axe Δ. Les arbres de transmission **2** et **3** sont mobiles l'un par rapport à l'autre en rotation d'axe Δ et sont reliés par une barre de torsion **4,** de sorte que les deux arbres de transmission **2** et **3** sont liés l'un à l'autre en translation d'axe Δ et sont susceptibles de connaître un mouvement relatif de rotation autour de l'axe Δ selon l'intensité du couple appliqué à chacun des deux axes de transmission **2, 3**. Comme le montre la **fig. 1,** la barre de torsion **4** se trouve disposée, à cet effet, dans un alésage axial **5** de l'arbre de transmission **2**, de manière à être liée par chacune de ses deux extrémités à l'un des arbres de transmission **2** et **3**. Il s'agit ici d'un mode de réalisation d'une jauge de torsion bien connue de l'homme du métier et ne nécessitant donc pas de plus amples explications.

Conformément à une caractéristique essentielle de l'invention et afin de permettre une détection optique de la position angulaire de la jauge **1** ainsi que de la position angulaire relative des deux arbres de transmission **2** et **3**, ces derniers sont chacun équipé d'une bague de codage optique 6. Selon l'exemple illustré les bagues de codage optique **6** sont disposées de manière adjacente. Chaque bague de codage optique **6** présente alors une surface extérieure périphérique **8** pour le codage optique. La géométrie particulière de chaque surface extérieure périphérique **8** ne rentre pas dans le cadre de la présente invention. Tout au plus il convient de préciser que chaque surface extérieure périphérique **8** présente une forme générale cylindrique et se trouve réalisée de manière à présenter une ou plusieurs séries de repères optiques susceptibles d'être détectés par des moyens non représentés permettant à la fois de connaître la position angulaire de la jauge de torsion 1 dans son ensemble ainsi que l'éventuel écart angulaire entre les deux arbres de transmission **2** et **3**. Afin d'offrir une résolution satisfaisante, les surfaces périphériques pour le codage optique **8** doivent être réalisées avec une très grande précision et présenter un très fort indice de réflexion.

Compte tenu de la dureté des matériaux constitutifs des arbres de transmission **2**, la réalisation des surfaces de codage optique directement dans le matériau constitutif de ces derniers présenterait un coût de réalisation rédhibitoire pour une production en grande série. Ainsi, l'invention propose de rapporter les bagues de codage optique **6** sur les arbres de transmission **2** et **3**.

Les bagues de codage **6** peuvent alors être réalisées dans un matériau plus malléable que les arbres de transmission **2** et donc présenter des coûts d'usinage moindres.

L'invention propose donc de fabriquer chaque arbre de transmission **2**, **3**, de manière qu'il comprenne une portée **10** de réception de la bague de codage **6**. Conformément à une caractéristique essentielle de l'invention, chaque portée de réception **10** comprend alors au moins un et selon l'exemple illustré deux anneaux **11** de cannelures **12** de direction axiale Δ.

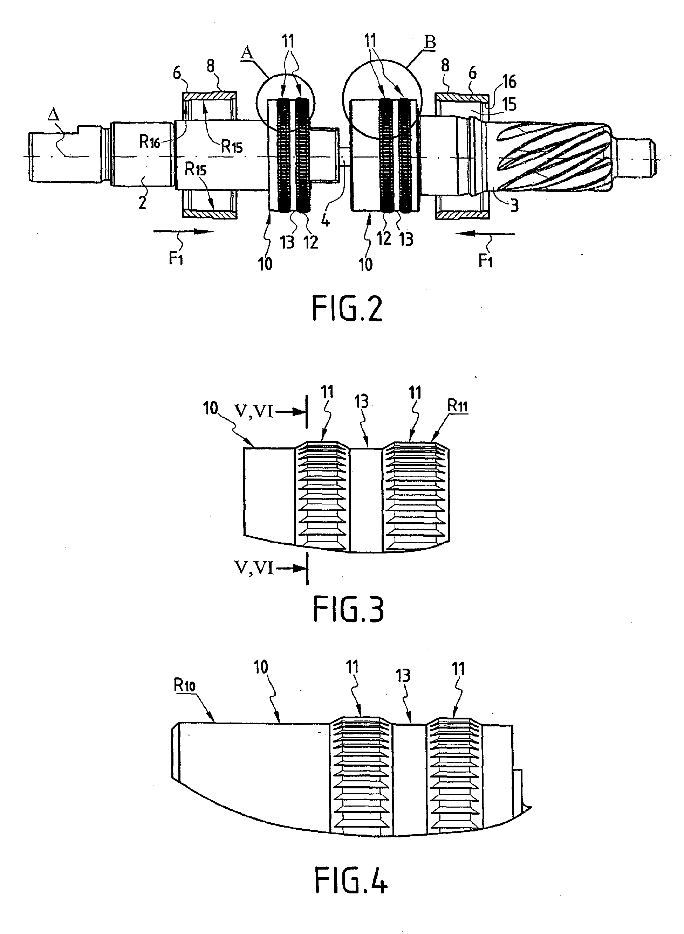

Comme le montrent plus particulièrement les **fig. 3** et **4** et selon l'exemple illustré, les deux anneaux de cannelures **11** sont aménagés en relief par rapport à la portée **10** et sont distants axialement l'un de l'autre, de manière que la portée **10** présente une surface lisse **13** entre les anneaux **11**. Chaque surface **13** définit, comme cela ressortira de la suite, une gorge d'immobilisation axiale de la bague de codage correspondante.

Selon l'exemple illustré, les anneaux de cannelures présentent une section droite axiale sensiblement trapézoïdale, comme le montrent plus particulièrement les **fig. 3** et **4**. De même, selon la forme de réalisation illustrée, les cannelures présentent une section droite transversale de forme trapézoïdale, comme le montre la **fig. 5**. Cependant, lorsqu'une très bonne pénétration des cannelures dans la bague de codage est recherchée, il sera adopté une section droite transversale de forme triangulaire pour les cannelures, comme illustré à la **fig. 6**.

De plus, selon l'exemple illustré, le fond des cannelures est disposé sur un cylindre présentant un diamètre **R**_{**12**} supérieur au diamètre minimum **R**_{**10**} de l'épaulement **10** au niveau, notamment, de la surface **13.**

Indépendamment de la fabrication de chaque arbre de transmission **2**, **3**, il est procédé à la fabrication de chacune des bagues de codage optique **8** dans un matériau présentant une dureté inférieure à celle de l'acier constitutif des arbres de transmission **2**, **3** et, de préférence, un matériau malléable, tel que, par exemple mais non exclusivement, en maillechort. Les bagues **8** sont chacune réalisées de manière à présenter une forme générale cylindrique pour comprendre, d'une part, la surface extérieure périphérique **8** et, d'autre part, un alésage axial **15** de forme sensiblement analogue à celle de la portée et présentant un diamètre intérieur **R**_{**15**} inférieur au plus grand diamètre **R**_{**11**} de la portée y compris l'anneau de cannelure **11.**

L'alésage axial **15** est réalisé de manière à comprendre un épaulement intérieur **16** qui présente un diamètre **R**_{**16**} inférieur au diamètre intérieur **R**_{**15**} de l'alésage axial **15** et, de préférence, inférieur ou égal au plus petit diamètre **R**_{**10**} de la portée **10** y compris l'anneau de cannelure **11.** Selon l'exemple illustré, le diamètre intérieur de l'alésage de l'épaulement **16** est égal au jeu près au plus petit diamètre **R**_{**10**} de la portée **10.**

L'assemblage de chaque bague de codage **6** sur son arbre de transmission respectif **2, 3** se fait alors ensuite par brochage, c'est-à-dire par engagement de la bague **6** sur la portée **10** dans le sens de la flèche **f**_{**1**}**,** de manière à engager les cannelures des anneaux **11** dans la paroi de l'alésage **15** vers l'épaulement intérieur **16**, sans toutefois engager les cannelures **12** dans l'épaulement. Au cours de cet engagement, les éventuels copeaux de la matière constitutive de la bague **6** seront alors refoulés en sens inverse de celui **F**_{**1**} d'introduction et donc en direction de l'épaulement **16** et ainsi restent prisonniers.

Après ce brochage, conformément à une autre caractéristique de l'invention, il est procédé au roulage de la bague de codage **6** ainsi adapté sur l'arbre de transmission **2**, **3** au niveau d'une surface de la bague **6** située à l'opposé de l'épaulement **16** par rapport à l'un au moins des anneaux de cannelure **11** et selon l'exemple illustré au niveau de la surface située en regard de la surface lisse **13** entre les deux anneaux **11**. Le roulage ainsi effectué contribue à immobiliser la bague optique en translation axiale, garantissant ainsi l'intégrité de la bague dans le temps. Selon l'invention, le brochage de la bague **6** et son roulage peuvent être effectués à tout stade de la fabrication de la jauge **1**. Toutefois de manière préférée, le roulage intervient après assemblage des deux arbres de transmission entre eux par l'intermédiaire de la barre de torsion **4**.

De plus, conformément à l'invention, la fabrication ou l'usinage des moyens de codage optique sur la surface **8** peut intervenir à tout stade et de préférence après assemblage des axes et brochage et sertissage des bagues, de manière à garantir la parfaite correspondance des repères optiques aménagés dans les surfaces **8** lorsque aucun couple n'est appliqué aux arbres de transmission **2, 3.**

Selon l'exemple décrit précédemment et illustré aux **fig. 1** à **5** les portées de réception des anneaux de codage sont pourvues de deux anneaux de cannelures réalisés en relief. Toutefois, conformément à l'invention, chaque portée de réception d'une bague de codage ne pourrait présenter qu'un seul anneau de cannelures qui ne serait pas nécessairement réalisé en relief. Ainsi, il pourrait être envisagé de réaliser les cannelures **12** sur toute la longueur axiale de la portée **10** et le roulage interviendrait sur le bord de la bague à l'opposé de l'épaulement **16**, de manière à réaliser un sertissage de la bague sur la portée **10**.

Par ailleurs, selon l'invention, les bagues de codage **6** et les axes de transmission **2**, **3** sont mis en oeuvre dans le cadre d'une jauge de torsion **1** toutefois, l'invention pourrait être mise en oeuvre pour tout type d'arbres de transmission tel que par exemple un arbre de transmission d'une machine tournante comme un moteur électrique ou encore une génératrice, une turbine ou analogue nécessitant la mise en oeuvre de moyens de codage optique permettant de détecter la position angulaire de l'arbre et/ou la vitesse angulaire de l'arbre de transmission.

Bien entendu, diverses autres modifications peuvent être apportées à l'invention sans sortir de son cadre.

## Revendications

1. Procédé de fabrication d'un arbre de transmission (**2, 3**) équipé d'une bague de codage optique (**6**) comprenant les étapes suivantes :
■ fabrication de l'arbre de transmission (**2**), de manière qu'il comprenne une portée (**10**) de réception de la bague (**6**), présentant au moins un anneau (**11**) de cannelures (**12**) de direction axiale,
■ fabrication de la bague de codage (**6**), de manière qu'elle comprenne, d'une part, au moins une surface extérieure périphérique (**8**) pour le codage optique et, d'autre part, un alésage axial (**15**) de forme sensiblement analogue à celle de la portée (**10**) présentant un diamètre intérieur (**R**_{**15**}) inférieur au plus grand diamètre (**R**_{**11**}) de la portée (**10**), y compris l'anneau de cannelures (**11**), et comprenant un épaulement intérieur (**16**) qui présente un diamètre (**R**_{**16**}) inférieur au diamètre intérieur (**R**_{**15**}) de l'alésage axial (**15**),
■ brochage de la bague de codage (**6**) sur l'arbre (**2, 3**) au niveau de la portée de réception, de manière à engager les cannelures (**12**) dans la paroi de l'alésage (**15**) vers l'épaulement intérieur (**16**), sans engager les cannelures (**12**) dans l'épaulement (**16**),
■ et roulage de la bague de codage (**6**) adaptée sur l'arbre de transmission (**2,3**) au niveau d'une surface de la bague (**6**) située à l'opposé de l'épaulement (**16**) par rapport à l'anneau de cannelure (**11**).

2. Procédé de fabrication selon la revendication 1, **caractérisé en ce que** l'épaulement (**16**) présente un diamètre intérieur (**R**_{**16**}) inférieur ou égal au plus petit diamètre (**R**_{**10**}) de la portée (**10**), y compris l'anneau de cannelures (**11**).

3. Procédé de fabrication selon la revendication 1 ou 2, **caractérisé en ce que** l'anneau de cannelures (**11**) est aménagé en relief par rapport à la portée (**10**) de réception de la bague (**6**).

4. Procédé de fabrication selon la revendication 3, **caractérisé en ce que** le diamètre (**R**_{**16**}) de l'anneau de cannelures (**11**) au niveau du fond des cannelures (**12**) est supérieur au diamètre (**R**_{**10**}) de la portée (**10**).

5. Procédé de fabrication selon la revendication 3 ou 4, **caractérisé en ce que** l'anneau de cannelure (**11**) présente, en section droite axiale, une forme trapézoïdale ou rectangulaire.

6. Procédé de fabrication selon l'une des revendications 1 à 5, **caractérisé en ce que** les cannelures (**12**) présentent, en section droite transversale, une forme trapézoïdale ou triangulaire.

7. Procédé de fabrication selon l'une des revendications 1 à 6, **caractérisé en ce que** la fabrication de l'arbre de transmission (**2, 3**) est effectuée de manière que la portée de réception de la bague (**6**) présente au moins deux anneaux (**11**) de cannelures distants axialement l'un de l'autre.

8. Procédé de fabrication selon la revendication 7, **caractérisé en ce que** le roulage de la bague de codage (**6**) est effectué au niveau de la surface de la bague (**6**) située en regard de la surface (**13**) de la portée (**10**) qui est située entre les deux anneaux de cannelures (**11**), de manière à sertir la matière de la bague de codage entre les deux anneaux de cannelures (**11**).

9. Procédé de fabrication selon l'une des revendications 1 à 8, **caractérisé en ce que** l'arbre de transmission (**2,3**) est réalisé en acier et **en ce que** la bague de codage (**6**) est réalisée dans un métal ou un alliage métallique présentant une dureté inférieure à celle de l'arbre de transmission (**2,3**).

10. Procédé de fabrication selon la revendication 9, **caractérisé en ce que** la bague de codage (**6**) est réalisée en maillechort

11. Procédé de fabrication d'une jauge de torsion comprenant deux arbres de transmission (**2, 3**) équipés chacun d'une bague de codage (**6**) optique, mobiles l'un par rapport à l'autre en rotation axiale, en étant liés en rotation par une barre de torsion (**4**), **caractérisé en ce qu'**il comprend les étapes suivantes :
■ fabrication de chacun des arbres de transmission (**2, 3**) conformément au procédé de fabrication selon l'une des revendications 1 à 10,
■ et assemblage des arbres de transmission (**2, 3**) ensemble et avec la barre de torsion (**4**).

12. Procédé de fabrication selon la revendication 11, **caractérisé en ce que** le roulage des bagues de codage optique (**6**) est effectué après assemblage des deux arbres (**2, 3**).

13. Arbre de transmission, **caractérisé en ce qu'**il comprend au moins une bague de codage optique (**6**) brochée et sertie sur l'arbre.

14. Arbre de transmission selon la revendication 13, **caractérisé en ce que** la bague de codage optique (**6**) est réalisée dans un matériau moins dur que l'arbre de transmission.

15. Arbre de transmission selon la revendication 14, **caractérisé en ce que** la bague de codage optique (**6**) est réalisée en maillechort.

16. Arbre de transmission selon la revendication 13, **caractérisé en ce qu'**il est obtenu selon le procédé de fabrication selon l'une des revendications 1 à 10.

17. Jauge de torsion comprenant deux arbres de transmission selon l'une des revendications 13 à 16, qui sont mobiles en rotation l'un par rapport à l'autre et liés en rotation par une barre de torsion (**4**) et qui comprennent chacun une bague de codage optique (**6**) brochée et roulée.

18. Jauge de torsion selon la revendication 17, **caractérisée en ce que** les bagues de codage optique (**6**) sont adjacentes.
